# EUROPEAN PATENT APPLICATION

(11) **EP 2 112 409 A1**
(43) Date of publication of application: **28.10.2009**
(21) Application number: 08425285.7
(22) Date of filing: 24.04.2008
(51) Int. Cl.: F16H 61/26, F16B 21/16

(54) **Device for disconnecting and reconnecting automatically two adjacent lengths of an elongated mechanical transmission member, such as a push-pull cable, a rod or a bar, particularly for use in motor vehicles**

(71) Applicant: SILA HOLDING INDUSTRIALE SPA, 10042 Nichelino (Torino) (IT)
(72) Inventor: Baudino, Cristiano, 12100 Cuneo (IT); Pellegrini, Giuseppe, 10091 Alpignano (IT)
(74) Representative: Rondano, Davide

(57) **Abstract**

The device (20; 120) comprises first and second elements (22, 24; 122, 124) which are intended to be rigidly connected each to a respective length (12, 14; 112, 114) of an elongated mechanical transmission member (10; 110), such as a push-pull cable, a rod or a bar, and are slidably arranged relative to one another in the axial direction of the transmission member (10; 110). The device (20; 120) further comprises at least one locking member (28; 128) radially movable between a lock position, in which it drivingly connects two lengths (12, 14; 112, 114) of the transmission member (10; 110) for translation with one another, and a unlock position, in which it disconnects the two lengths (12, 14; 112, 114) of the transmission member (10; 110) from one another, thereby making them free to translate relative to one another, as well as a cam member (30; 130) having at least one cam surface (32; 132) which cooperates with the respective locking member (28; 128) so as to keep this latter in the lock position up to the predetermined travel value and to move it into the unlock position in case of travel values higher than the predetermined travel value.

## Description

The present invention refers generally to mechanisms for transmitting commands by means of elongated mechanical transmission members, such as push-pull cables, rods or bars, particularly for use in motor vehicles. More specifically, the present invention relates to a device for disconnecting automatically two adjacent lengths of an elongated mechanical transmission member when the travel exceeds a predetermined travel value, and for reconnecting automatically those lengths when the travel is again below that predetermined travel value.

The expression "elongated mechanical transmission member" used above is to be intended as referred, in the following description and claims, to any mechanical member able to transmit a command by means of a translational movement. Such a member may be either a flexible member (push-pull cable) or a rigid member (rod or bar). Moreover, the term "travel" used above refers, in the following description and claims, to the amount of the relative movement between the elongated mechanical transmission member and the body of the automatic disconnection and reconnection device.

Devices are known which allow to disconnect and reconnect automatically two adjacent lengths of an elongated mechanical transmission member, such as a cable, a rod or a bar, the member being intended in particular for transmission of the commands imparted by the driver from the gear shift lever of a motor vehicle to the actuating members of the gearbox of that vehicle when the travel of the transmission member is above or below a predetermined travel value, respectively. These known devices, however, are rather complicated, since they use toothed or ratchet gear mechanisms for releasable connection of the two adjacent lengths of the elongated mechanical transmission member with one another.

It is therefore the object of the present invention to provide a device for disconnecting and reconnecting automatically two adjacent lengths of an elongated mechanical transmission member, in particular a member intended for transmission of the commands imparted by the driver from the gear shift lever of a motor vehicle to the actuating members of the gearbox of that vehicle, which is simple, inexpensive and reliable in use.

This and other objects are fully achieved according to the present invention by virtue of a device having the characteristics defined in the characterizing part of attached independent claim 1.

Further advantageous characteristics of the invention are specified in the dependent claims.

In short, the invention is based on the idea of interposing, between the two adjacent lengths of the elongated mechanical transmission member, a device able to disconnect and reconnect automatically the two lengths every time that the travel of the transmission member is above or below a predetermined travel value, respectively, the device comprising:
- a first element intended to be drivingly connected for translation with one of the two lengths of the transmission member and a second element intended to be drivingly connected for translation with the other length of the transmission member, said first and second elements being slidable relative to one another in the axial direction of the transmission member; and
- cam-like releasable connection means arranged to keep the first and second elements drivingly connected with one another during the axial translational movement of the transmission member up to a predetermined travel value and to disconnect automatically those elements above that predetermined travel value.

Preferably, said cam-like releasable connection means include:
- a plurality of locking members which are radially movable between a lock position, in which they drivingly connect the two lengths of the transmission member for translation with one another, and an unlock position, in which they disconnect the two lengths of the transmission member from one another thereby making them free to translate relative to one another; and
- a cam member having at least one cam surface cooperating with the locking members so as to keep those members in the lock position up to a travel value equal to the predetermined travel value and to move those members into the unlock position above the predetermined travel value.

More preferably, the first and second elements are made respectively as a sleeve-like element and as a rod-like element slidably mounted within the sleeve-like element, and the locking members are made as studs which are slidably mounted within respective radial through holes of the sleeve-like element and are able to engage, in the lock position, in respective notches provided on the lateral surface of the rod-like element. In this case, the cam surface has a first surface portion which extends axially and is placed at a smaller distance from the axis of the transmission member, a second surface portion which extends axially and is placed at a greater distance from the axis of the transmission member, and a third inclined surface portion which joins the first and second surface portions, in such a manner that the studs are kept in the lock position until they are in contact (possibly with the interposition of balls or needles) with the first surface portion, whereas they move into the unlock position and thus allow the two lengths of the transmission member to be disconnected from one another when they lose contact with the first surface portion and come into contact with the second surface portion.

According to a first embodiment, the cam member is secured to a stationary part of the motor vehicle, for example a part of the support casing of the gear shift lever in case of mounting of the device on the side of the passenger compartment. In this way, until the travel of the gear shift lever, and hence of the length of the transmission member connected thereto, is such that the studs cooperate with the first surface portion, the two lengths of the transmission member are drivingly connected for translation with one another and the transmission member is therefore able to transmit to the gearbox the commands imparted by the driver through the gear shift lever. On the contrary, as soon as the travel of the gear shift lever exceeds the predetermined value, the studs lose contact with the first surface portion and therefore disconnect the two lengths of the transmission member from one another. When the travel is above that predetermined travel value, the longitudinal movements of the gear shift lever are not transmitted to the gearbox, as the two lengths of the transmission member are disconnected for translation from one another. In any case, as soon as the travel of the gear shift lever returns below the predetermined value, the studs come again into contact with the first surface portion (lock position), thereby reconnecting the two lengths of the transmission member for translation with one another. This solution is indicated for control systems which operate by cable or rod and are intended for motor-vehicle transmissions in which the shift from/to some operating positions (for example from P to R and vice versa, in case of automatic transmissions) is controlled mechanically by means of the elongated mechanical transmission member (cable or rod), whereas the shift from/to other operating positions (for example from N to D and vice versa, in case of automatic transmissions) is controlled electronically by virtue of special sensors which detect the movement of the gear shift lever. It is therefore sufficient to set the predetermined travel value of the device according to the invention so that the device intervenes disconnecting automatically the two lengths of the transmission member, and hence the gear shift lever from the gearbox, when the gear shift lever switches from the operating range corresponding to the mechanical transmission of the commands to the operating range corresponding to the electronic transmission of the commands.

According to a variant of construction, intended in particular for a system for controlling the gearbox of a heavy vehicle provided with tilting cab, the cam member is secured to a part which is drivingly connected with the cab, in such a manner that it causes automatically the two lengths of the transmission member (be it a cable or a rod) to be disconnected from one another when the cab is moved from the normal driving position to the tilted position and to be reconnected with one another when the cab is moved back into the normal driving position.

Further characteristics and advantages of the invention will become apparent from the following detailed description, given purely by way of non-limiting example with reference to the attached drawings, in which:
Figures 1 and 2 are perspective views of a device for disconnecting and reconnecting automatically two adjacent lengths of an elongated mechanical transmission member, such as a cable, a rod or a bar, according to a preferred embodiment of the present invention, in the connection position and in the disconnection position, respectively;
Figures 3 and 4 are cut-away views of the device of Figures 1 and 2, in the connection position and in the disconnection position, respectively;
Figure 5 is a perspective view of a device for disconnecting and reconnecting automatically two adjacent lengths of an elongated mechanical transmission member, such as a cable, a rod or a bar, according to a further preferred embodiment of the present invention;
Figure 6 is a perspective view on an enlarged scale which shows the device of Figure 5 sectioned through a plane perpendicular to the axis of the elongated mechanical transmission member;
Figure 7 is an axial section view which shows the device of Figure 5 in the connection position; and
Figures 8 and 9 are axial section views which both show the device of Figure 5 in the disconnection position and which differ from one another in the travel value of the elongated mechanical transmission member.

The following description will be given with specific reference to the application of the automatic connection/disconnection device to an elongated mechanical transmission member constituted by a push-pull cable and intended for transmission of commands from a gear shift lever of a motor vehicle to the gearbox of that vehicle. It is however clear that the invention can be equally applied to any other type of elongated mechanical transmission member, such as for example a rod, as well as to any other type of control system which provides for the use of elongated mechanical transmission members for transmission of commands from a control member to an actuating a member.

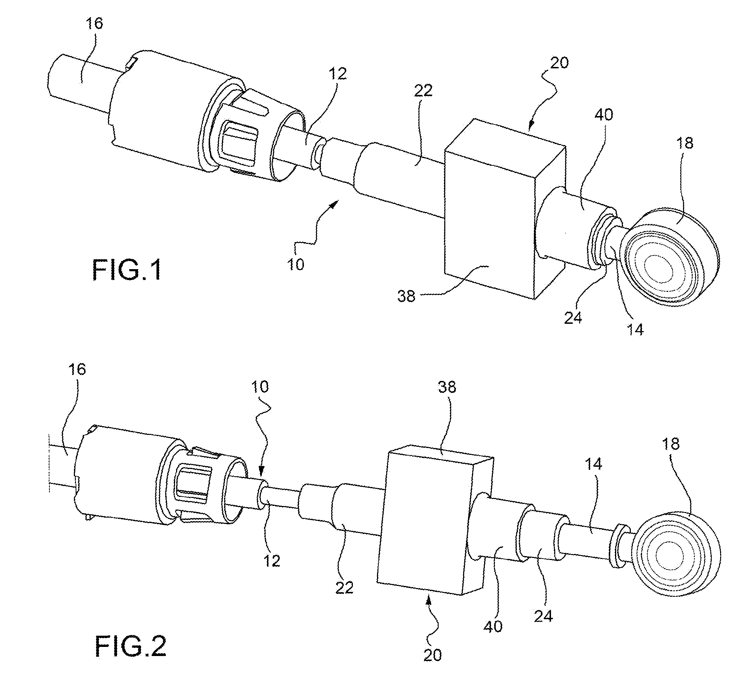

With reference first to Figures 1 to 4, an elongated mechanical transmission member made in the present embodiment as a push-pull cable is generally indicated 10 and includes a first core length 12, a second core length 14 separate from the first one and a sheath 16 into which the first core length 12 is slidably inserted. In the illustrated embodiment the second core length 14 consists of a rigid end portion of the transmission member 10 and is provided at its end with a ball-joint head 18 in which a ball pin (not shown) of a gear shift lever (also not shown) can engage. An automatic disconnection and reconnection device, generally indicated 20, is interposed between the two core lengths 12 and 14.

The device 20 includes first of all a first element 22 drivingly connected for translation with the first core length 12 and a second element 24 drivingly connected for translation with the second core length 14 (and made in a single piece with the second core length 14 in the illustrated example). The first element 22 and the second element 24 are slidably mounted relative to one another in the axial direction of the transmission member 10, hereinafter simply referred to as axial direction. More specifically, the first element 22 is made in the shape of a sleeve and has an inner cylindrical hole 26 extending in the axial direction, whereas the second element 24 is made in the shape of a cylindrical rod and is slidably mounted within the hole 26 of the first element 22.

The device 20 further includes cam-like releasable connection means arranged to keep the two elements 22 and 24 drivingly connected with one another during the axial translational movement of the transmission member 10 up to a predetermined travel value and to disconnect automatically the two elements 22 and 24 once that predetermined travel value has been exceeded.

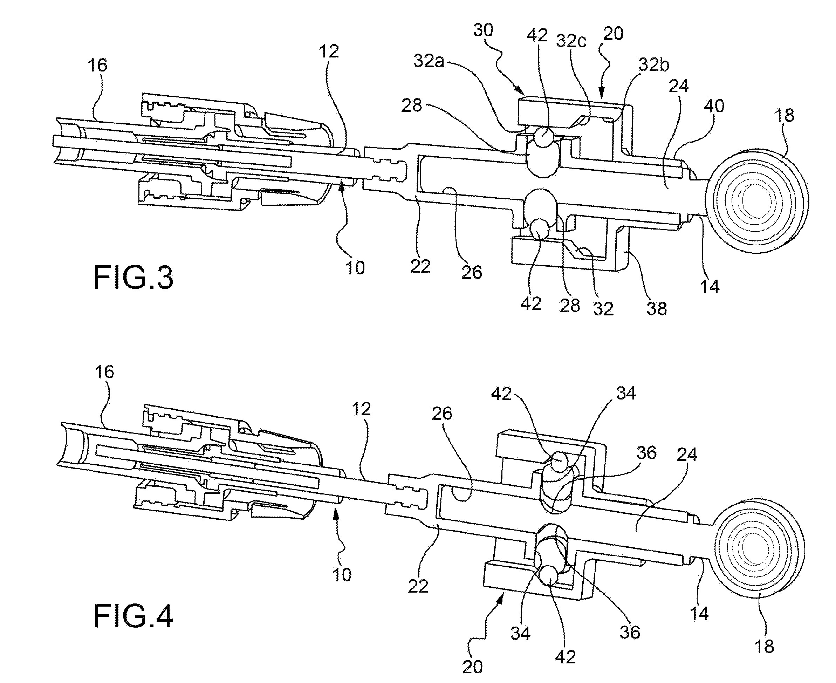

More specifically, these cam-like releasable connection means include a plurality (two, in the illustrated embodiment) of locking members 28 movable in the radial direction (i.e. in a direction perpendicular to the axial direction) between a lock position (Figure 3), in which they drivingly connect the two elements 22 and 24, and hence the two core lengths 12 and 14, for translation with one another, and an unlock position (Figure 4), in which they disconnect the two elements 22 and 24, and hence the two core lengths 12 and 14, from one another, thereby making them free to translate relative to one another, as well as a cam member 30 having a corresponding plurality of cam surfaces 32 each cooperating with a respective locking member 28 so as to keep the locking member 28 in the lock position up to a travel value of the transmission member 10 equal to the predetermined travel value and to move the locking member 28 into the unlock position when the travel value exceeds the predetermined travel value.

In the illustrated embodiment, the locking members 28 are made as studs slidably mounted into respective radial through holes 34 of the second element 24 and are arranged to engage, in the lock position, in respective notches 36 provided on the lateral surface of the first element 22. In the illustrated embodiment, the axial section of the notches 36 is shaped as an arc of circumference, but may of course have any other shape, such as for example a triangular or trapezoidal shape. The radially outer ends of the studs 28 advantageously have an axial section the shape of which is complementary to that of the notches 36, so as to ensure a perfect mating of two elements 22 and 24 when the studs 28 are in the lock position.

The cam member 30 is made as a hollow piece comprising a main body 38 of parallelepiped shape and a guide cylindrical portion 40, which is preferably formed in a single piece with the body 38 and is guided on the outer cylindrical surface of the second element 24. Each of the cam surfaces 32 (two surfaces in the illustrated example, i.e. one for each stud 28, arranged on opposite sides of the axis of the transmission member 10) has a first surface portion 32a placed at a smaller distance from the axis of the transmission member 10, a second surface portion 32b placed at a greater distance from the axis of the transmission member 10, and a third surface portion 32c which joins the first and second surface portions. In the illustrated embodiment the first and second surface portions 32a and 32b are flat surfaces and extend parallel to the axis of the transmission member 10, whereas the third surface portion 32c is also a flat surface but extends obliquely relative to the axis of the transmission member 10.

According to an alternative embodiment (not illustrated), the main body of the cam member has an axially symmetrical configuration with respect to the axis of the transmission member. In that case, the first and second surface portions of the cam surface are cylindrical surfaces of smaller and greater diameter, respectively, whereas the third surface portion is a frusto-conical surface.

A ball (or alternatively a needle) 42 is interposed between each stud 28 and the respective cam surface 32 and serves to reduce the friction between the stud 28 and the cam member 30 when these two components slide relative to one another. The studs 28 are kept in the lock position, in which they engage in the respective notches 36 and thus ensure that the two elements 22 and 24, i.e. the two core lengths 12 and 14, are connected with one another, until they slide along the respective first surface portions 32a (Figure 3). The two core lengths 12 and 14 remain therefore connected with one another, and can thus ensure the mechanical transmission of the commands from the gear shift lever to the gearbox, up to a predetermined travel value equal at the most to the axial size of the first surface portion 32a. In case of higher travel values (Figure 4), the studs 28 lose contact with the respective first surface portions 32a and come in contact with the respective second surface portions 32b, moving therefore into the unlock position and causing the two elements 22 and 24, i.e. the two core lengths 12 and 14, to be disconnected from one another. The transmission member 10 is therefore no more able to transmit the commands from the gear shift lever to the gearbox. The shift of the studs 28 from the unlock position to the lock position, when the travel of the transmission member 10 returns below the predetermined travel value, is made easier by the inclination of the third surface portion 32c.

In case of the device 20 for disconnecting and reconnecting automatically an elongated mechanical transmission member being intended for transmission of commands from the gear shift lever of a motor vehicle to the gearbox of that vehicle, the cam member 30 will be secured to a stationary part of the vehicle, for example to a part of the support casing of the gear shift lever. In this way, until the travel of the gear shift lever, and therefore of the first length 12 connected thereto, is such that the studs 28 cooperate with the first surface portion 32a, the two lengths 12 and 14 of the transmission member 10 are drivingly connected for translation with one another and therefore the transmission member 10 is able to transmit to the gearbox the commands imparted by the driver through the gear shift lever. On the contrary, as soon as the travel of the gear shift lever exceeds the predetermined value, the studs 28 lose contact with the first surface portion 32a and therefore disconnect the two lengths 12 and 14 of the transmission member 10 from one another. In case of travel values higher than the predetermined travel value, the longitudinal movements of the gear shift lever are not transmitted to the gearbox, as the two lengths 12 and 14 of the transmission member 10 are disconnected for translation from one another. In any case, as soon as the travel of the shift lever returns below the predetermined value, the studs 28 come again into contact with the first surface portion 32a (lock position), thereby reconnecting the two lengths 12 and 14 of the transmission member for translation with one another. Such a solution is indicated for control systems via cable or rod which are intended for motor vehicle transmissions in which the shift from/to some operating positions (for example from P to R and vice versa, in case of automatic transmissions) is controlled mechanically by means of the elongated mechanical transmission member (cable or rod), whereas the shift from/to other operating positions (for example from N to D and vice versa, in case of automatic transmissions) is controlled electronically by virtue of special sensors which detect the tilting movement, typically in the axial direction, of the gear shift lever. It is therefore sufficient to set the predetermined travel value of the device according to the invention so that the device intervenes disconnecting automatically the two lengths of the transmission member from one another, and hence the gear shift lever from the gearbox, when the gear shift lever switches from the operating range corresponding to the mechanical transmission of the commands to the operating range corresponding to the electronic transmission of the commands.

The automatic disconnection and reconnection device according to the invention can also be used for example for transmission of commands from the gear shift lever to the gearbox in a heavy vehicle provide with tilting cab, in order to allow the cab to be tilted without causing breakages in the elongated mechanical transmission member (or in the elongated mechanical transmission members) and/or in the components of the transmission system connected thereto. In that case, the cam member will be secured to a part which is drivingly connected to the cab, in such a manner as to cause the two lengths of the transmission member to be automatically disconnected from one another when the cab is moved from the normal driving position to the tilted position and to be reconnected with one another when the cab is brought back into the normal driving position.

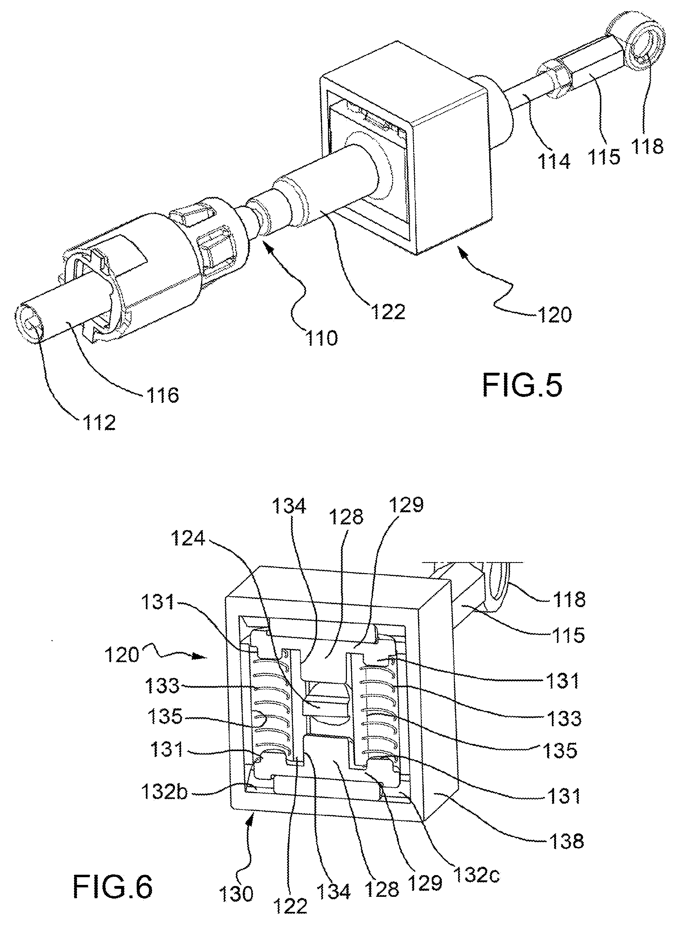

A second preferred embodiment of a disconnection and reconnection device for an elongated mechanical transmission member is illustrated in Figures 5 to 9, where parts and elements identical or corresponding to those of Figures 1 to 4 have been given the same reference numerals, increased by 100.

With reference to Figures 5 to 9, an elongated mechanical transmission member is generally indicated 110 and includes a first core length 112, a second core length 114 separate from the first one and a sheath 116 into which the first core length 112 is slidably inserted. The second core length 114 is drivingly connected for translation with a rigid end portion 115 of the transmission member 110 provided with a ball-joint head 118 for engaging a ball pin (not shown) of a control member (also not shown), such as a gear shift lever. An automatic disconnection and reconnection device, generally indicated 120, is interposed between the two core lengths 112 and 114.

The device 120 includes a first element 122 drivingly connected for translation with the first core length 112 and a second element 124 drivingly connected for translation with the second core length 114 (made in a single piece with the second core length 114 in the illustrated example). The first element 122 and the second element 124 are slidably mounted relative to one another in the axial direction of the transmission member 110, hereinafter simply referred to as axial direction. More specifically, the first element 122 is made in the shape of a sleeve and has an inner cylindrical hole 126 extending in the axial direction, whereas the second element 124 is made in the shape of a cylindrical rod and is slidably mounted within the hole 126 of the first element 122.

The device 120 further includes cam-like releasable connection means arranged to keep the two elements 122 and 124 drivingly connected with one another in the axial translational movement of the transmission member 110 up to a predetermined travel value and to disconnect automatically the two elements 122 and 124 from one another once the travel value exceeds the predetermined travel value.

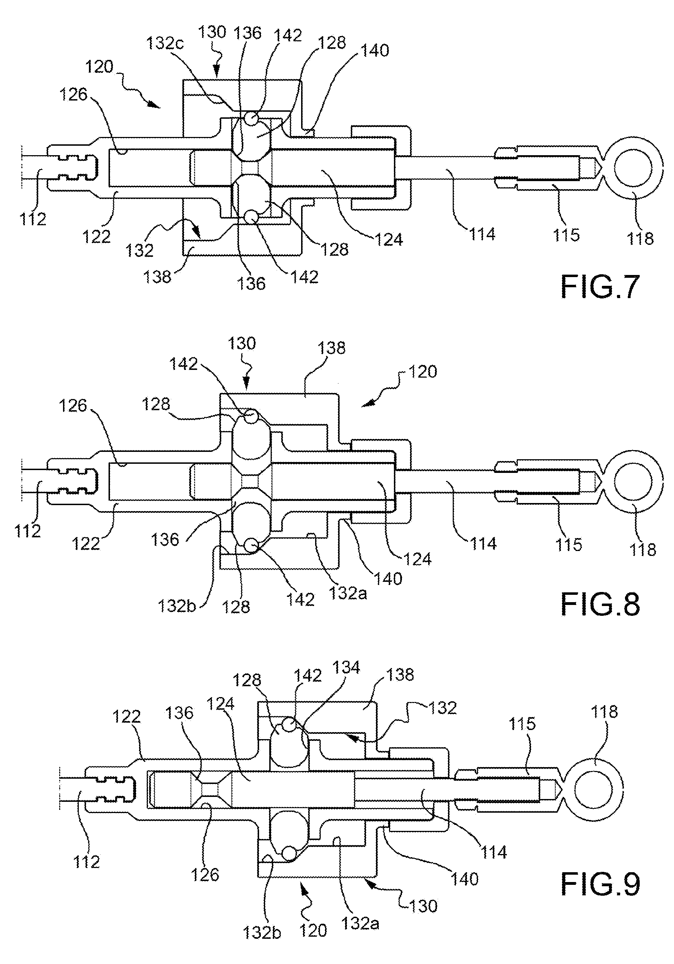

More specifically, these cam-like releasable connection means include a plurality (two, in the illustrated embodiment) of locking members 128 movable in the radial direction (i.e. in a direction perpendicular to the axial direction) between a lock position (Figure 7), in which they drivingly connect the two elements 122 and 124, and hence the two core lengths 112 and 114, for translation with one another, and an unlock position (Figures 8 and 9), in which they disconnect the two elements 122 and 124, and hence the two core lengths 112 and 114, from one another, thereby making them free to translate relative to one another, as well as a cam member 130 having a corresponding plurality of cam surfaces 132 cooperating each with a respective locking member 128 so as to keep the locking member 128 in the lock position up to a travel value of the transmission member 110 equal to the predetermined travel value and to move the locking member 128 into the unlock position in case of a travel value greater than the predetermined travel value.

In the illustrated embodiment the locking members 128 are made as studs slidably mounted within respective radial through holes 134 of the second element 124 and are arranged to engage, in the lock position, in respective notches 136 provided on the lateral surface of the first element 122. In the illustrated embodiment the notches 136 have an axial section of trapezoidal shape, but may of course have any other shape, such as for example the shape of a triangle or of an arc of circumference. The radially inner ends of the studs 128 advantageously have an axial section with a shape complementary to that of the notches 136, so as to ensure a perfect mating of the two elements 122 and 124 when the studs 128 are in the lock position.

As can be seen in the cut-away view of Figure 6, each stud 128 is provided at its radially outer end with a transverse bar 129 having at either of its ends a retaining projection 131 for a respective spring 133, which is made as a cylindrical helical spring in the illustrated example. The two springs 133 are interposed each between the two transverse bars 129 of the two studs 128 so as to tend to move these latter away from one another, thereby disengaging them from the respective notches 136 in the second element 124. The two springs 133 are received each within a respective cylindrical hole 135 parallel to the holes 134 in which the studs 128 are slidably arranged.

The cam member 130 is made as a hollow piece comprising a main body 138 of parallelepiped shape and a guide cylindrical portion 140, which is preferably formed in a single piece with the body 138 and is guided on the outer cylindrical surface of the second element 124. Either of the cam surfaces 132 (two surfaces in the illustrated example, i.e. one for each stud 128, which are arranged on opposite sides of the axis of the transmission member 110 has a first surface portion 132a placed at a smaller distance from the axis of the transmission member 110, a second surface portion 132b placed at a greater distance from the axis of the transmission member 110, and a third surface portion 132c which joins the first and second surface portions. In the illustrated embodiment the first and second surface portions 132a and 132b are flat surfaces and extend parallel to the axis of the transmission member 110, whereas the third surface portion 132c is also a flat surface but extends obliquely relative to the axis of the transmission member 110.

A ball (or alternatively a needle) 142 is interposed between each stud 128 and the respective cam surface 132 and serves to reduce the friction between the stud 128 and the cam member 130 when these two components slide relative to one another. The studs 128 are kept in the lock position, in which they engage in the respective notches 136 and thus ensure that the two elements 122 and 124, i.e. the two core lengths 112 and 114, are connected to one another, until they slide along the respective first surface portions 132a (Figure 7). The two core lengths 112 and 114 remain therefore connected to one another and can thus ensure the mechanical transmission of the commands from the gear shift lever to the gearbox up to a predetermined travel value equal at the most to the axial size of the first surface portion 132a. In case of higher travel values (Figure 8), the studs 128 lose contact with the respective first surface portions 132a and come into contact with the respective second surface portions 132b, thereby moving into the unlock position and causing the two elements 122 and 124, i.e. the two core lengths 112 and 114, to be disconnected from one another. The transmission member 110 is therefore no more able to transmit the commands from the gear shift lever to the gearbox. As can be seen in the view of Figure 9, in fact, a further movement (to the left with respect to a person observing that figure) of the shift lever, and hence of the second core length 114, does not result in any movement of the first core length 112, and hence of the actuating member controlled by it. The shift of the studs 128 from the unlock position to the lock position, when the travel of the transmission member 110 returns below the predetermined travel value, is made easier by the inclination of the third surface portion 132c.

As far as the mounting of the member 130 is concerned, what has been previously said with reference to the embodiment of Figures 1 to 4 still apply.

Naturally, the principle of the invention remaining unchanged, the embodiments and constructional details may vary widely with respect to those described and illustrated purely by way of non-limiting example.

## Claims

1. A device (20; 120) for disconnecting and reconnecting automatically two adjacent lengths (12, 14; 112, 114) of an elongated mechanical transmission member (10; 110), such as a push-pull cable, a rod or a bar, every time that the travel of the transmission member (10; 110) is respectively above or below a predetermined travel value, the device (20; 120) comprising:
a first and a second element (22, 24; 122, 124) intended to be rigidly connected each to a respective length (12, 14; 112, 114) of the transmission member (10; 110), said first and second elements (22, 24; 122, 124) being slidable relative to one another in the axial direction of the transmission member (10; 110); and
cam-like releasable connection means (28, 30, 32; 128, 130, 132) arranged to keep the first and second elements (22, 24; 122, 124) drivingly connected for axial translation with one another up to said predetermined travel value and to disconnect automatically the first and second elements (22, 24; 122, 124) from one another as soon as the travel value exceeds said predetermined travel value.

2. Device according to claim 1, wherein said cam-like releasable connection means include
at least one locking member (28; 128) radially movable between a lock position, in which it drivingly connects the two elements (22, 24; 122, 124) of the transmission member (10; 110) for translation with one another, and an unlock position, in which it disconnects the two lengths (12, 14; 112, 114) of the transmission member (10; 110) from one another, thereby making them free to translate relative to one another; and
a cam member (30; 130) having at least one cam surface (32; 132) cooperating with said at least one locking member (28; 128) so as to keep this latter in the lock position up to said predetermined travel value and to move it into the unlock position in case of travel values higher than said predetermined travel value.

3. Device according to claim 2, wherein the first element (22; 122) is made as a sleeve and the second element (24; 124) is made as a rod and is slidably mounted within the first element (22; 122).

4. Device according to claim 3, wherein said at least one locking member (28; 128) is made as a stud slidably mounted within a respective radial through hole (34; 134) of the first element (22; 122) and is arranged to engage, in the lock position, in a respective notch (36; 136) provided on the lateral surface of the second element (24; 124).

5. Device according to any of claims 2 to 4, wherein said at least one cam surface (32; 132) has first and second surface portions (32a, 32b; 132a, 132b) which extend axially and are placed at a smaller and at a greater distance, respectively, from the axis of the transmission member (10; 110), and a third surface portion (32c; 132c) which joins the first and second surface portions (32a, 32b; 132a, 132b), in such a manner that said at least one locking member (28; 128) is kept in the lock position until it abuts against the first surface portion (32a; 132a), whereas it is kept in the unlock position and thus allows the two lengths (12, 14; 112, 114) of the transmission member (10; 110) to be disconnected from one another when it abuts against the second surface portion (32b; 132b).

6. Device according to any of claims 2 to 5, wherein the cam member (30; 130) is made as a hollow piece comprising a main body (38; 138) having said at least one cam surface (32; 132) and a guide portion (40; 140) guided on the outer surface of the second element (24; 124).

7. Device according to claim 6, wherein the main body (38; 138) and the guide portion (40; 140) are made in a single piece.

8. Device according to claim 6 or claim 7, wherein the main body (38; 138) has a substantially parallelepiped configuration.

9. Device according to claim 8, comprising two cam surfaces (32; 132) and two locking members (28; 128) arranged on opposite sides of the axis of the transmission member (10; 110).

10. Device according to claim 8 or claim 9, wherein the first and second surface portions (32a, 32b; 132a, 132b) are flat surfaces and extend parallel to the axis of the transmission member (10; 110) and wherein the third surface portion (32c; 132c) is a flat surface and extends obliquely to the axis of the transmission member (10; 110).

11. Device according to any of claims 2 to 10, wherein a rolling body (42; 142) is interposed between said at least one locking member (28; 128) and the respective cam surface (32; 132).

12. A system for controlling a gearbox of a motor vehicle, comprising a gear shift lever and at least one elongated mechanical transmission member (10; 110) for transmitting to the gearbox the commands imparted by the driver through the gear shift lever, **characterized in that** it comprises, for each transmission member (10; 110), a device (20; 120) according to any of preceding claims.
